Europäisches Patentamt

European Patent Office

Office européen des brevets

(19)

(11) **EP 1 164 783 A1**

(12) **DEMANDE DE BREVET EUROPEEN**

(43) Date de publication:
**19.12.2001 Bulletin 2001/51**

(51) Int Cl.7: **H04N 3/233**, H04N 9/28

(21) Numéro de dépôt: **01410071.3**

(22) Date de dépôt: **15.06.2001**

| | |
|---|---|
| (84) Etats contractants désignés:<br>**AT BE CH CY DE DK ES FI FR GB GR IE IT LI LU MC NL PT SE TR**<br>Etats d'extension désignés:<br>**AL LT LV MK RO SI** | (72) Inventeurs:<br>• **Le Briz, Olivier**<br> **38000 Grenoble (FR)**<br>• **Scouarnec, Olivier**<br> **38330 Saint Nazaire les Eymes (FR)**<br>• **Ianigro, Corinne**<br> **38000 Grenoble (FR)** |
| (30) Priorité: **16.06.2000 FR 0007719** | |
| (71) Demandeur: **STMicroelectronics S.A.**<br>**92120 Montrouge (FR)** | (74) Mandataire: **de Beaumont, Michel**<br>**Cabinet Michel de Beaumont 1, rue Champollion**<br>**38000 Grenoble (FR)** |

(54) **Correction de convergence d'un écran ou projecteur à tube cathodique**

(57) L'invention concerne un signal de commande (CCS) d'un moyen de correction (21, 23) d'au moins un faisceau d'électrons qui balaie ligne à ligne un écran (3), dont l'amplitude évolue le long de chaque ligne selon une courbe d'un premier type déterminée par des paramètres de ligne (P1, P2, P3, P4, P5), chacun des paramètres de ligne évoluant, d'une ligne à l'autre, selon une courbe du premier type déterminée par des paramètres de colonne ($P1_{P1}$-$P1_{P5}$, $P2_{P1}$-$P2_{P5}$, $P3_{P1}$-$P3_{P5}$, $P4_{P1}$-$P4_{P5}$, $P5_{P1}$-$P5_{P5}$).

Fig 5B

Fig 5A

Fig 5C

EP 1 164 783 A1

**Description**

La présente invention concerne la commande d'écrans ou de projecteurs à tube cathodique et plus particulièrement la cammande de moyens propres à corriger le trajet des faisceaux d'électrons dans de tels dispositifs. L'invention sera décrite par la suite en relation avec un écran à tube cathodique mais on notera qu'elle s'applique plus généralement à tout dispositif similaire (par exemple, un projecteur à tube cathodique où, au sens de l'invention, on assimile la surface bombardée du tube à un écran).

Pour afficher des images en couleur, par exemple dans un écran à tube cathodique, la face intérieure d'un écran à tube cathodique comporte trois réseaux de luminophores rouges, verts et bleus, déposés côte à côte selon des motifs variés. Les trois réseaux de luminophores sont excités par trois faisceaux d'électrons très voisins et déviés ensembles, dont chacun va frapper les luminophores d'une seule couleur. Un circuit de commande de balayage permet de dévier les faisceaux d'électrons selon une succession de lignes horizontales.

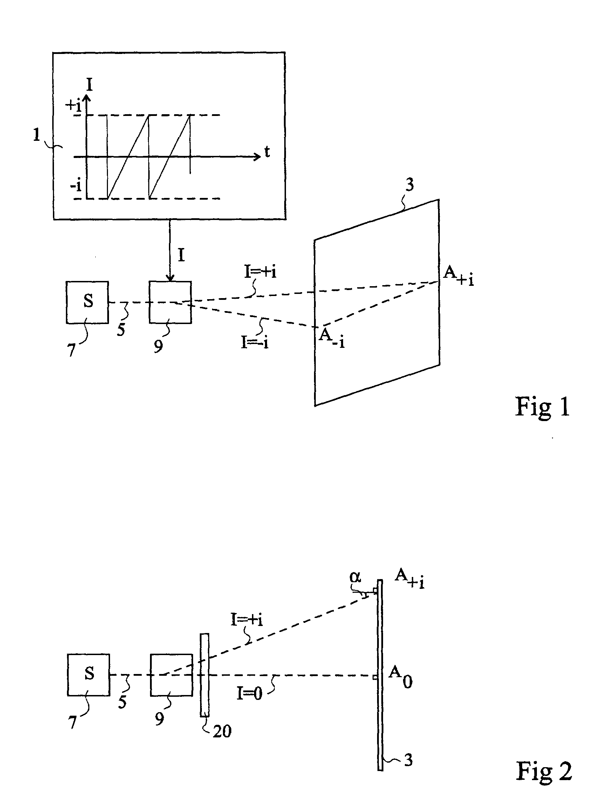

La figure 1 représente très schématiquement et partiellement des éléments d'un écran participant à l'affichage d'image sur cet écran. Essentiellement, un circuit de commande de balayage horizontal 1 est utilisé avec un écran à tube cathodique 3 pour afficher des images à partir d'un signal vidéo (non représenté). Le circuit 1, synchronisé en fréquence et en phase avec le signal vidéo, produit un courant I de commande en déviation d'un faisceau d'électrons 5 émis par une source (S) 7. Le courant I évolue en dent de scie entre une valeur de début de ligne -i et une valeur de fin de ligne +i. Le courant I agit sur un déviateur 9 constitué, par exemple, de bobines et détermine la déviation du faisceau d'électrons 5, l'intensité du faisceau variant en fonction du signal vidéo. On a représenté pour des raisons de clarté un seul faisceau d'électrons, comme pour un écran noir et blanc. Lorsque le courant I croît de manière linéaire entre les valeurs - i et +i, le point d'impact du faisceau 5 sur l'écran 3 évolue continûment entre une position $A_{-i}$ et une position $A_{+i}$. Une ligne est ainsi affichée à l'écran. Des moyens de balayage trame, non représentés, permettent de dévier le faisceau 5 verticalement en fonction du temps, afin de balayer successivement toutes les lignes des images.

Un inconvénient d'un tel écran est que le faisceau 5 est en fait composé de trois faisceaux d'électrons qui doivent être déviés très précisément et de manière identique. Or, les sources de ces faisceaux d'électrons sont disposées de manière à être aussi proches que possible les unes des autres mais elles ne sont jamais idéalement confondues. On ne peut alors éviter de petites différences lors de la déviation de ces faisceaux, différences qui en général augmentent avec l'angle de déviation.

La figure 2 illustre schématiquement le changement de l'angle d'incidence d'un faisceau d'électrons 5 lors du balayage d'une ligne de l'écran 3. En supposant que la normale à l'écran en un point $A_0$ contienne le point d'émission de la source 7, les luminophores situés en cette position $A_0$ (idéalement, au centre de l'écran) sont éclairés avec un angle incident nul, alors que des luminophores situés en une position $A_{+i}$, à une extrémité de la ligne, sont éclairés avec un angle incident $\alpha$ non nul. Ces erreurs ou défauts de déviation font que les trois composantes du faisceau 5 ne frappent pas toujours l'écran 3 en un même point. Ce phénomène est appelé défaut de convergence et se traduit à l'écran par une dissociation spatiale des trois couleurs composant chacun des points situés dans les zones où la convergence n'est pas assurée. La présence de ces zones est particulièrement apparente dans le cas des écrans plats à tubes cathodiques, dans lesquels l'angle d'incidence des faisceaux d'électrons peut être élevé.

Pour afficher une image correcte, il faut corriger de manière individuelle la déviation des composantes du faisceau d'électrons 5. Cette correction sélective de la convergence des faisceaux peut être obtenue par un moyen de correction 20 qui comprend par exemple des bobines distinctes des bobines 9 de balayage. Le type et la disposition de telles bobines, dites de correction, dépendent notamment de l'agencement des sources des faisceaux d'électrons.

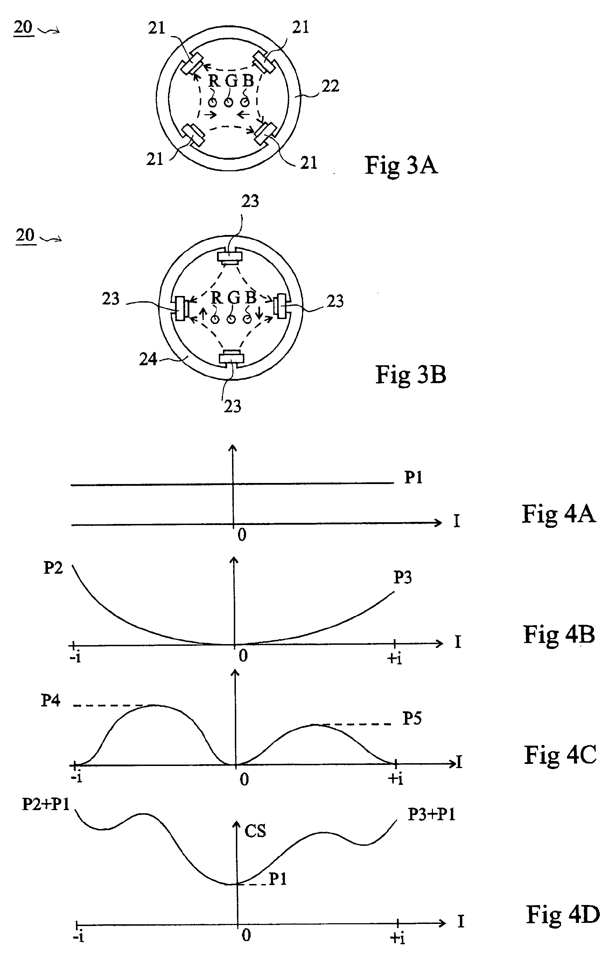

La figure 3A représente, en vue de face, trois sources R, G, B qui produisent trois faisceaux d'électrons destinés à éclairer respectivement les réseaux de luminophores rouges, verts et bleus d'un écran couleur (non représenté). Les sources R, G, B sont, dans cet exemple, disposées selon une ligne horizontale parallèle à l'écran.

Un moyen de correction 20 comprend quatre bobines 21 ayant deux à deux le même axe, qui sont disposées autour des sources R, G et B selon deux axes perpendiculaires qui se croisent au niveau de la source G dans un plan perpendiculaire aux faisceaux. Les bobines 21 sont connectées ensemble, leurs axes respectifs font des angles de 45, 135, 225 et 315° par rapport à la ligne formée par les sources R, G et B. La structure illustrée à titre d'exemple comporte quatre bobines 21, mais d'autres structures comportant un plus grand nombre de bobines existent également. Les bobines sont enroulées autour de noyaux magnétiques reliés à la périphérie interne d'un circuit magnétique 22 circulaire. On a représenté par des flèches en pointillés les lignes de champ principales entre les bobines 21. La correction s'effectue grâce à la plus forte déviation à laquelle sont soumis les faisceaux émis par les sources R et B, plus proches des bobines. Selon le sens du courant qui parcourt les bobines 21, les faisceaux émis par les sources R et B se rapprochent ou s'éloignent du faisceau émis par la source G. Si l'on suppose que le faisceau G est centré, les bobines 21 permettent de régler la convergence horizontale des faisceaux émis par les sources R, G et B.

La figure 3B représente quatre autres bobines 23 du moyen de correction 20. Les bobines 23 ont également deux à deux le même axe, sont disposées autour des sources R, G et B selon deux axes perpendiculaires qui se croisent au niveau de la source G dans un plan perpendiculaire aux faisceaux mais (dans cet exemple) différent du plan dans lequel s'inscrivent les axes des bobines 21 (figure 3A). Les bobines 23 sont connectées ensemble et elles sont disposées de manière que leurs axes font des angles de 45° par rapport aux axes des bobines 21. Les bobines 23 sont enroulées autour de noyaux magnétiques reliés à la périphérie interne d'un circuit magnétique 24 circulaire. On a représenté par des flèches en pointillés les lignes de champ principales entre les bobines 23. Selon le sens du courant qui parcourt les bobines 23, les faisceaux émis par les sources R et B s'éloignent ou se rapprochent l'un de l'autre dans des directions opposées perpendiculaires à la ligne formée par les sources R, G et B. Si l'on suppose que le faisceau G est centré, les bobines 23 permettent de régler la convergence verticale des faisceaux R, G et B. Pour des raisons de clarté, les moyens d'alimentation des circuits magnétiques n'ont pas été représentés aux figures 3A et 3B. De tels systèmes de correction de convergence sont parfaitement connus.

On notera que les circuits magnétiques 22 et 24 peuvent être confondus. Il est possible d'utiliser une combinaison des bobines 21 et 23 pour corriger les problèmes de convergence dus à l'angle d'incidence des faisceaux d'électrons. Comme l'angle d'incidence varie en chaque point de l'écran, les signaux de commande des bobines 21 et 23 doivent être différents pour chaque point de l'écran. En outre, il est connu que, pour donner un résultat satisfaisant, les signaux de commande des bobines de correction doivent présenter aussi peu de points de rupture de pente que possible. En effet, une rupture de pente du signal de commande peut dans certains cas être visible à l'écran, ce qui n'est pas souhaitable. De plus, les signaux de commande fournis aux bobines de correction en un même point de deux écrans de même type sont différents car chaque écran présente des problèmes de convergence uniques, par exemple liés au positionnement des sources lors de la fabrication du châssis. Ces problèmes de convergence qui varient d'un écran à l'autre et surtout d'une zone de l'écran à l'autre sont dits "dynamiques", par opposition aux défauts de convergence "statiques", uniformes sur un écran donné. De tels défauts statiques se corrigent au moyen des bobines 21 et 23, par exemple par application d'une tension continue. On notera que les bobines 21 et 23 permettent également de corriger d'autres problèmes de convergence dynamique, par exemple les problèmes dus à une magnétisation localisée du châssis. Un processus classique consiste à générer les signaux de commande des bobines de correction de l'écran à partir d'un nombre prédéterminé de valeurs numériques mesurées et stockées en usine pour chaque écran.

Une première solution consiste à déterminer empiriquement la valeur de la commande à fournir aux bobines de correction en un nombre prédéterminé de points de plusieurs lignes étalons de l'écran. Les valeurs stockées pour chaque ligne étalon sont fournies à un filtre analogique, qui produit un signal de commande utilisé pour la ligne étalon et les lignes voisines. L'établissement manuel des valeurs stockées fournies au filtre analogique est un processus long et coûteux, et on cherche à limiter au maximum le nombre de ces valeurs. Le signal de commande produit par le filtre analogique évolue entre deux valeurs stockées successives au rythme de la charge ou de la décharge du filtre. Le nombre de valeurs stockées étant limité, la constante de temps du filtre est la plus élevée possible afin de limiter les ruptures de pente du signal de commande. Malgré cela, le signal de commande obtenu conserve des ruptures de pente au niveau de ses sommets et le nombre de valeurs stockées reste élevé. De plus, de nombreux dispositifs d'affichage modernes sont amenés à passer d'un format d'affichage à un autre, ce qui implique notamment que la longueur ou la durée de balayage d'une ligne peut changer. La constante de temps élevée du filtre analogique peut être trop forte si la durée de balayage des lignes diminue. De plus, les signaux de commande produits pour deux lignes étalons consécutives peuvent présenter de fortes discontinuités, ce qui n'est pas souhaitable.

Une seconde solution consiste à réaliser, par exemple au moyen d'un calculateur, une interpolation numérique entre les valeurs stockées susmentionnées. Une telle solution permet de produire une courbe de signal de commande exempte de point de rupture. Par contre, cette solution est complexe à mettre en oeuvre et elle nécessite toujours de stocker un grand nombre de valeurs numériques pour chaque ligne. En outre, il est connu de l'homme de l'art qu'un tel calcul d'interpolation est délicat à adapter à un changement de la longueur des lignes. Pour les variations verticales, on peut produire les signaux de commande qui sont destinés aux lignes comprises entre deux lignes étalons, par interpolation numérique entre les signaux de commande calculés pour les deux lignes étalons. Une telle méthode cependant demande des ressources de calcul très importantes et le stockage d'un grand nombre de valeurs. Ainsi, les calculs demandés par cette méthode ne peuvent pas, dans l'état de la technique, être effectués par un calculateur suffisamment puissant en raison des vitesses de balayage mises en jeu.

Un objet de la présente invention est de produire, au moyen d'un nombre réduit de valeurs stockées, un signal de commande d'un moyen de correction d'un faisceau d'électrons qui balaie ligne à ligne un écran.

Un autre objet de la présente invention est de produire un signal de commande de bobines de correction d'un écran à tube cathodique.

Un autre objet de la présente invention est de produire un tel signal de commande d'une manière qui permet facilement de changer de format d'affichage, en particulier la taille, la position et la fréquence de l'image.

Un autre objet de la présente invention est de produire un tel signal de commande qui évolue selon une courbe qui ne présente pas de rupture de pente.

Un autre objet de la présente invention est de produire un tel signal de commande qui ne présente pas de discontinuités entre deux lignes consécutives.

Pour atteindre ces objets, la présente invention prévoit un signal de commande d'un moyen de correction d'au moins un faisceau d'électrons qui balaie ligne à ligne un écran, dont l'amplitude évolue le long de chaque ligne selon une courbe d'un premier type déterminée par des paramètres de ligne, chacun des paramètres de ligne évoluant, d'une ligne à l'autre, selon une courbe du premier type déterminée par des paramètres de colonne.

Selon un mode de réalisation de la présente invention, chaque courbe du premier type est la sommation d'un niveau constant, fixé par un premier paramètre, de deux demi-courbes en $X^n$, où n est une valeur prédéterminée quelconque, situées de part et d'autre du centre de la courbe, l'origine commune des demi-courbes en $X^n$ se situant au centre de la courbe et les valeurs maximales des demi-courbes en $X^n$ aux extrémités de la ligne étant fixées respectivement par un deuxième et un troisième paramètres, et d'une courbe en dos de chameau à dérivée continue, composée d'au moins deux bosses mises bout-à-bout et situées de part et d'autre du centre de la ligne, chaque bosse ayant une dérivée nulle en son sommet, et chaque valeur minimale ou maximale de la courbe étant fixée respectivement par un paramètre distinct.

Selon un mode de réalisation de la présente invention, la courbe en dos de chameau a une valeur nulle et une dérivée nulle au centre de la ligne.

Selon un mode de réalisation de la présente invention, la courbe en dos de chameau a une valeur nulle et une dérivée nulle à ses extrémités.

Selon un mode de réalisation de la présente invention, le signal de commande est déterminé, pour chaque ligne, par cinq paramètres de ligne.

Selon un mode de réalisation de la présente invention, chaque paramètre de ligne évolue selon une courbe déterminée par cinq paramètres de colonne.

La présente invention vise également un dispositif d'ajustement de la convergence de trois faisceaux d'électrons parallèles, qui comporte un groupe de bobines de correction de convergence horizontale et un groupe de bobines de correction de convergence verticale, chaque groupe étant commandé par un signal de commande tel que décrit précédemment.

La présente invention vise également un dispositif de correction de la luminance d'un écran éclairé par au moins un faisceau d'électrons d'intensité commandable, l'intensité du faisceau d'électrons étant corrigée par un signal de commande tel que décrit précédemment.

La présente invention vise également un circuit destiné à produire un signal de commande tel que décrit précédemment, comprenant un premier calculateur propre à produire le signal de commande à partir d'un nombre prédéterminé de paramètres de ligne, en cadence avec un signal de balayage des lignes de l'écran, et au moins un second calculateur propre à produire les paramètres de ligne de chaque ligne de l'écran à partir d'un nombre prédéterminé de paramètres de colonne, en cadence avec un signal de balayage vertical de l'écran.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1, précédemment décrite, représente schématiquement un circuit de commande de balayage horizontal classiquement utilisé avec un tube cathodique ;

la figure 2, précédemment décrite, illustre schématiquement la variation de l'angle d'incidence d'un faisceau d'électrons d'un écran à tube cathodique ;

les figures 3A et 3B, précédemment décrites, représentent schématiquement des bobines de correction respectivement horizontale et verticale de la convergence des faisceaux R, G et B d'un écran couleur ;

les figure 4A à 4D représentent schématiquement un mode de réalisation de la structure d'un signal de commande pour une ligne selon la présente invention ;

les figures 5A à 5C représentent schématiquement un mode de réalisation des signaux de commande de ligne selon la présente invention, pour trois lignes différentes d'un écran, ainsi que la courbe combinée qui permet de calculer un premier paramètre de ligne pour chacune des lignes ;

la figure 6 représente schématiquement un mode de réalisation d'un circuit de commande selon la présente invention ;

les figures 7A à 7D représentent schématiquement la structure d'un signal de commande selon une variante de la présente invention ; et

la figure 8 représente schématiquement une autre application d'un signal de commande selon la présente invention.

Les mêmes éléments ont été désignés par les mêmes références aux différentes figures. Pour des raisons de clarté, seuls les éléments du système de correction qui sont nécessaires à la compréhension de l'invention ont été représentés aux figures et seront décrits par la suite. En particulier, les détails constitutifs des circuits de déviation n'ont pas été représentés et sont considérés comme connus. En outre, les représentations des figures (notamment 4, 5 et 7) ne sont pas à l'échelle.

Plutôt que de mémoriser la commande à fournir aux bobines de correction en un nombre important de points prédéterminés de l'écran, puis d'interpoler le signal de commande entre deux valeurs stockées, l'invention prévoit de produire un signal de commande qui se base uniquement sur une courbe calculée par un calculateur à partir d'un faible nombre de paramètres. Ces quelques paramètres peuvent être établis par un opérateur. Une telle courbe peut, par exemple, être une courbe combinée égale à la sommation de plusieurs courbes mathématiques simples, aisément produites par un calculateur et déterminées par très peu de paramètres (de préférence, moins de dix).

Les figures 4A à 4D illustrent l'obtention d'un signal de commande CS pour une ligne selon l'invention, qui suit une courbe combinée (figure 4D) correspondant à la sommation de trois courbes simples. La première courbe (figure 4A) est un niveau constant fixé par un paramètre P1. La seconde courbe (figure 4B) est une courbe en $X^n$, où n est une valeur positive prédéterminée quelconque (entière ou décimale), dont un premier minimum ou maximum se situe au centre de la ligne de l'écran et dont les valeurs aux extrémités (maxima ou minima) sont fixées respectivement par deux paramètres P2 et P3. La troisième courbe (figure 4C) est une courbe en dos de chameau à dérivée continue et comprenant au moins deux sommets définissant des maxima, dont les valeurs respectives sont fixées par deux paramètres P4 et P5, de part et d'autre du centre de la ligne. La valeur de cette courbe au centre de la ligne est préférentiellement nulle et les extrémités de la courbe ont, de préférence, une valeur nulle. Selon le mode de réalisation préféré de la figure 4C, la courbe en dos de chameau présente des dérivées nulles à ses deux extrémités. Le signal de commande CS formé par la sommation de ces trois courbes est particulièrement adapté aux bobines de correction d'un écran à tube cathodique : il est défini par cinq paramètres seulement, il présente suffisamment de variations pour couvrir les défauts classiques d'un écran, et il ne présente pas de rupture de pente. On notera que ces paramètres peuvent être positifs ou négatifs.

La courbe en $X^n$ (figure 4B) est, de préférence, calculée pour chaque demi-ligne. La courbe est d'abord calculée pour prendre la valeur P2 au début de la ligne et, de préférence, la valeur 0 au milieu de la ligne. Ensuite, la courbe est calculée à partir de la valeur minimale 0 au milieu de la ligne et pour prendre la valeur maximale P3 à la fin de la ligne. Ces calculs, aisément réalisés à partir de la formule $X^n$ et des minima et maxima de la courbe sur chaque demi-ligne, sont faits pour un nombre prédéterminé de points de la courbe.

La courbe en dos de chameau (figure 4C) est, de préférence, également calculée pour chaque demi-ligne. La première moitié de la courbe est une cloche ou bosse ayant, de préférence, une dérivée et une valeur nulles au début et au milieu de la ligne, et ayant une dérivée nulle et prenant la valeur P4 au quart de la ligne. La seconde moitié de la courbe est une bosse ayant, de préférence, une dérivée et une valeur nulles au milieu et en fin de ligne, et ayant une dérivée nulle et prenant la valeur P5 aux trois quarts de la ligne.

De préférence, un même nombre de points est calculé pour la courbe en dos de chameau et pour la courbe en $X^n$. Le calcul des points des courbes précédentes peut être effectué par un calculateur classique ou par un calculateur spécifique rapide qui utilise une table réduite de valeurs stockée dans une mémoire morte. Les valeurs calculées pour chaque point sont additionnées de manière classique et elles sont fournies à un convertisseur numérique/analogique de manière à produire un signal analogique de commande des bobines de correction de convergence horizontale ou verticale. A titre d'exemple, le calcul de 32 points pour une demi-ligne d'écran permet de commander des bobines classiques de correction de convergence de manière satisfaisante. Le signal de commande de chaque ligne est calculé de manière entièrement numérique en suivant une courbe calculée comme on l'a vu précédemment et la valeur du signal en chaque point de la ligne ne dépend que de la position du point sur l'écran. Sur une ligne, cette position est une fonction du courant I fourni au déviateur du faisceau d'électrons, et du format de balayage de l'écran. En cas de changement du format de balayage, il est simple de reprogrammer le calculateur pour qu'il associe toujours la même valeur du signal de correction à un même point de l'écran. Cette opération, communément appelée "Tracking", est réalisable par une reprogrammation qui est à la portée de l'homme de l'art et qui ne sera pas détaillée plus avant.

Si cinq paramètres suffisent à définir parfaitement la commande des bobines de correction verticale ou horizontale pour une ligne d'un écran, il n'est pas envisageable en pratique de déterminer puis de stocker cinq paramètres pour chaque ligne de l'écran.

Une première solution consiste à séparer l'écran en plusieurs bandes horizontales et à déterminer cinq paramètres pour chacune des bandes seulement. Dans une telle solution cependant, la commande de correction déterminée pour une bande peut être très différente de la commande de correction d'une bande voisine. Ces discontinuités de correction peuvent nuire à l'aspect de l'écran et elles ne sont pas souhaitables. On retrouve ainsi les inconvénients exposés précédemment de discontinuité entre les lignes.

Une autre solution consiste à stocker les paramètres de ligne de plusieurs lignes étalons réparties sur tout l'écran, à calculer la commande de correction pour deux lignes étalon consécutives puis à calculer la commande de correction de chaque ligne intermédiaire par interpolation. Une telle solution peut permettre d'obtenir des corrections satisfaisantes à l'écran. Cependant, il faut un grand nombre de lignes étalon pour que le calcul d'interpolation donne de bons résultats. Cela demande de déterminer puis de stocker un grand nombre de paramètres de ligne, ce qui est relativement lourd à mettre en oeuvre. On retrouve ici les inconvénients décrits précédemment d'une interpolation au niveau des lignes.

Selon la présente invention, on prévoit de calculer, pour chaque ligne de l'écran, les paramètres (par exemple cinq) de ligne que l'on utilise pour calculer le signal de commande de cette ligne. On prévoit en outre de faire évoluer chaque paramètre de ligne d'une ligne à l'autre (ou verticalement) selon une courbe combinée telle que décrite précédemment, également déterminée par cinq paramètres de colonne. Ainsi, on calcule selon la présente invention un signal de commande composite, évoluant au sein de chaque ligne et d'une ligne à l'autre.

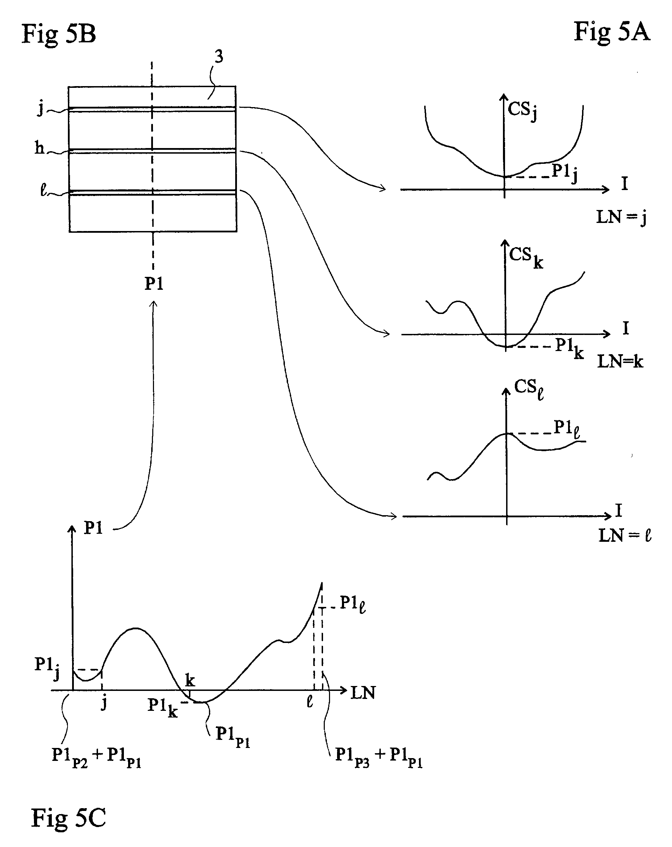

La figure 5A représente trois signaux de commande de correction $CS_j$, $CS_k$, $CS_l$, appliqués à trois lignes j, k, 1 d'un écran 3 représenté en figure 5B.

La figure 5C représente, à titre d'exemple, l'évolution du paramètre de ligne P1 qui fixe le niveau constant utilisé pour calculer le signal de commande de chaque ligne de l'écran. Le paramètre P1 suit une courbe combinée déterminée par cinq paramètres de colonne $P1_{P1}$ à $P1_{P5}$. A la manière des courbes sommes précédentes, la courbe de définition du paramètre P1 est la sommation :

- d'un niveau constant déterminé par le paramètre $P1_{P1}$,
- d'une courbe en $X^n$ déterminée par les paramètres $P1_{P2}$ et $P1_{P3}$, préférentiellement obtenue par jonction de deux demi-courbes ayant un maximum ou minimum commun dans une position correspondant sensiblement à une ligne centrale de l'écran, et
- de deux bosses d'une courbe en dos de chameau déterminées par les paramètres $P1_{P4}$ et $P1_{P5}$.

De la même manière, les paramètres de ligne P2, P3, P4, et P5, non représentés pour des raisons de clarté, suivent chacun une courbe combinée déterminée par cinq paramètres de colonne, respectivement $P2_{P1}$ à $P2_{P5}$, $P3_{P1}$ à $P3_{P5}$, $P4_{P1}$ à $P4_{P5}$ et $P5_{P1}$ à $P5_{P5}$. De cette manière, pour une ligne Y de la partie supérieure de l'écran, un paramètre Pi sera donné par la formule :

$$Pi = Pi_{P1} + (Pi_{P2})Y^n + (Pi_{P4})f(Y),$$

où f(Y) est l'image de la valeur Y dans la fonction en dos de chameau précédente. De même, pour une ligne Y de la partie inférieure de l'écran, un paramètre Pi sera donné par la formule :

$$Pi = Pi_{P1} + (Pi_{P3})Y^n + (Pi_{P5})f(Y).$$

On notera que les signaux de commande déterminés par ces paramètres ne présentent aucune discontinuité d'une ligne à l'autre et aucune rupture de pente d'un point à l'autre, tout en étant déterminés par un nombre très réduit de paramètres. En effet, 25 paramètres de colonne suffisent à déterminer complètement les 5 paramètres de ligne pour chaque ligne de l'écran, et donc le signal de commande fourni pour l'ensemble de l'écran à un groupe de bobines de convergence horizontale (ou de convergence verticale). Ainsi, 50 paramètres permettent d'assurer la commande des bobines de correction horizontale et verticale. Ces 50 paramètres peuvent facilement être déterminés par un opérateur ou un dispositif automatique observant chaque écran, par exemple sur la chaîne de production.

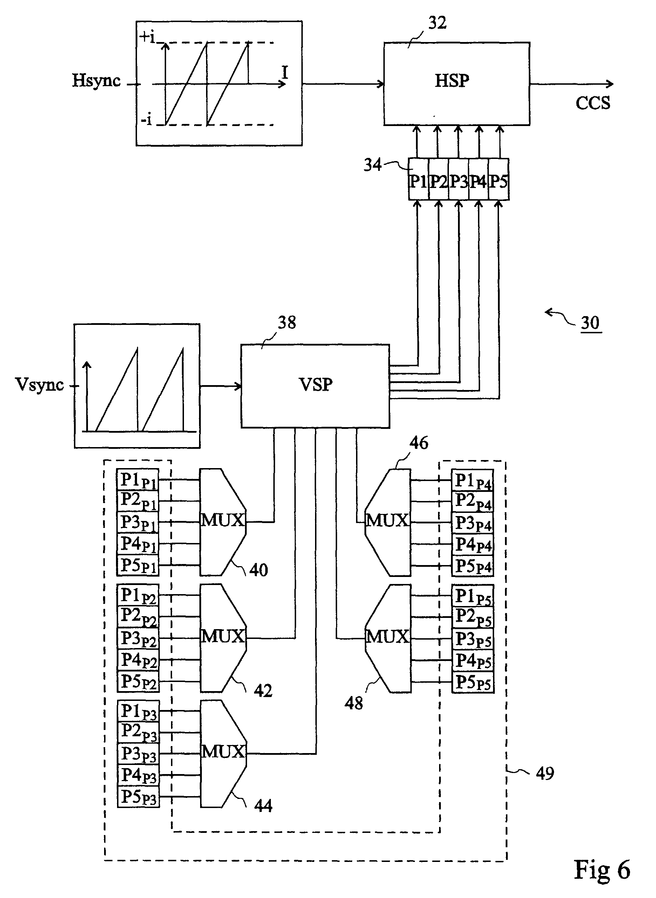

La figure 6 représente schématiquement un mode de réalisation d'un circuit 30 qui produit un signal de commande d'un groupe de bobines de correction horizontale selon la présente invention. Ce circuit fonctionne en étant synchronisé avec un circuit de commande d'un groupe de bobines de correction verticale. Ce dernier, semblable au circuit 30, n'est pas représenté. La synchronisation des circuits de commande des bobines de correction n'est pas modifiée par la mise en oeuvre de l'invention et est parfaitement classique. Le circuit de commande 30 reçoit, comme base de temps du balayage de ligne, un signal qui a une période $T_{HSYNC}$ (par exemple le signal en dent de scie I de la figure 1). Il comprend un calculateur de courbe combinée horizontale (HSP) 32 prévu pour calculer, en une période de balayage d'une ligne, une courbe combinée telle que décrite précédemment, à partir de cinq paramètres de ligne (P1, P2, P3, P4, P5) fournis par un registre 34. Chaque paramètre de ligne est inscrit dans le registre 34 connecté en sortie d'un calculateur de courbe combinée verticale (VSP) 38. Le calculateur 38 reçoit, comme base de temps de balayage vertical de l'écran, un signal de période $T_{VSYNC}$, et il reçoit cinq paramètres depuis cinq multiplexeurs 40, 42, 44, 46 et 48. Le multiplexeur 40 comporte cinq entrées dont chacune est connectée à une case mémoire distincte d'une mémoire 49, respectivement prévue pour recevoir les paramètres de colonne $P1_{P1}$, $P2_{P1}$, $P3_{P1}$, $P4_{P1}$, $P5_{P1}$. Le multiplexeur 42 comporte cinq entrées dont chacune est connectée à une case mémoire distincte de la mémoire 49, stockant respectivement les paramètres de colonne $P1_{P2}$, $P2_{P2}$, $P3_{P2}$, $P4_{P2}$, $P5_{P2}$. La même structure est reproduite pour les multiplexeurs 44, 46 et 48 qui comportent chacun cinq entrées dont chacune est connectée à une case mémoire distincte de la mémoire 49 pour stocker respectivement les paramètres de colonne $P1_{P3}$ à $P5_{P3}$, $P1_{P4}$ à $P5_{P4}$, et $P1_{P5}$ à $P5_{P5}$. En pratique, l'accès aux paramètres de colonne stockés dans la mémoire 49 pourra se faire au moyen d'un système d'adressage classique. La représentation de la figure 6 a uniquement pour objet d'exposer fonctionnellement un mode de lecture de ces paramètres.

Les éléments du circuit 30 sont connectés de manière que leur fonctionnement soit géré par un microprocesseur, qui n'a pas été représenté par mesure de clarté. Le calculateur 38 fournit au calculateur 32 les cinq paramètres de ligne nécessaires pour calculer le signal de commande des bobines de correction pour chaque ligne de l'écran, avant son affichage. Pour cela, les multiplexeurs 40, 42, 44, 46 et 48 sont commandés de manière que le calculateur 38 reçoit successivement les cinq paramètres nécessaires pour calculer, avant son affichage, chacun des cinq paramètres de ligne d'une ligne en fonction de la position de la ligne sur l'écran. La position de la ligne est déterminée de manière classique en fonction du signal de synchronisation verticale VSYNC.

Bien entendu, la présente invention est susceptible de diverses variantes et modifications qui apparaîtront à l'homme de l'art. A titre d'exemple, bien que l'on ait représenté un circuit 30 utilisant un seul calculateur 38 qui produit successivement les cinq paramètres de ligne nécessaires au calculateur 32, on peut également concevoir un circuit de commande utilisant cinq calculateurs distincts qui calculent simultanément les cinq paramètres de ligne nécessaires au calculateur 32. Dans un tel cas de figure, les multiplexeurs 40, 42, 44, 46 et 48 ne sont plus utiles.

D'autre part, on a décrit un cas dans lequel cinq paramètres suffisent à déterminer une courbe combinée, mais on peut également utiliser d'autres courbes sommes, par exemple une courbe déterminée par neuf paramètres.

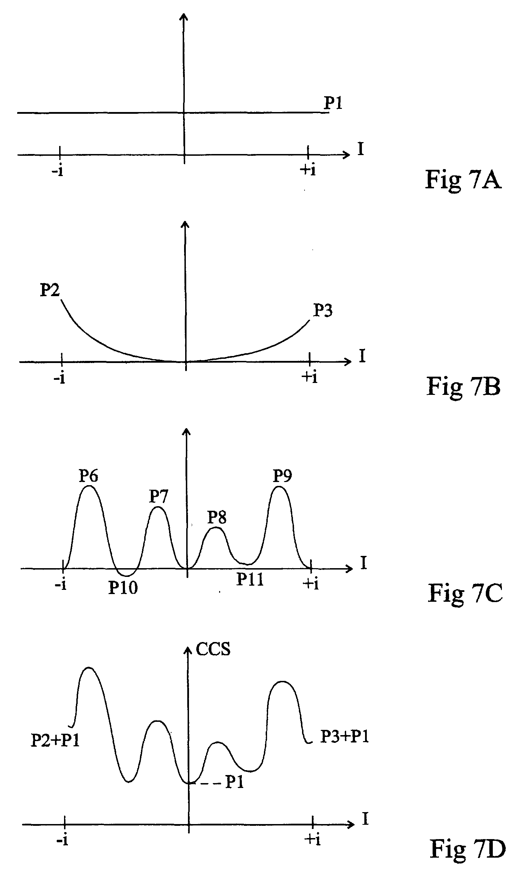

Les figures 7A à 7D illustrent schématiquement l'obtention d'une telle courbe combinée (figure 7D), qui est comme précédemment la combinaison d'un niveau constant (figure 7A), d'une courbe en $X^n$ (figure 7B) et d'une courbe en dos de chameau (figure 7C). Dans ce cas cependant, la courbe en dos de chameau comporte quatre bosses mises bout à bout, chaque bosse ayant une dérivée nulle en ses deux extrémités et en son sommet et la courbe ayant une valeur nulle aux deux extrémités et au centre de la ligne. La courbe est déterminée par six paramètres : quatre paramètres P6, P7, P8 et P9 déterminant chacun la valeur d'un maximum constitué par le sommet d'une bosse, et deux paramètres P10, P11 déterminant chacun la valeur d'un minimum constitué par le point de jonction respectivement entre les première et deuxième bosses et entre les troisième et quatrième bosses. Une telle courbe permettra un réglage plus fin du signal de commande fourni aux bobines de convergence. Toutefois, des courbes à cinq paramètres constituent selon l'invention un compromis préféré en termes de précision et de simplicité. On notera qu'il est également possible d'utiliser d'autres courbes en dos de chameau que celles qui ont été décrites, par exemple une courbe dont les extrémités sont les sommets de demi-bosses.

En outre, bien que l'invention ait été décrite ci-dessus en relation avec un écran à tube cathodique pourvu de bobines de correction de convergence, elle s'applique plus généralement à tout système de correction de faisceaux d'un dispositif d'affichage ou de projection. En effet, tous ces systèmes utilisent classiquement des moyens de correction de faisceau, en particulier statiques, qui peuvent être réutilisés pour la mise en oeuvre de l'invention. L'adaptation de la présente invention à de tels moyens de correction est à la portée de l'homme du métier à partir des indications fonctionnelles ressortissant de la description ci-dessus.

Par exemple, un signal de correction selon la présente invention peut permettre de corriger une non-uniformité de la chrominance ou de la luminance d'un écran à tube cathodique.

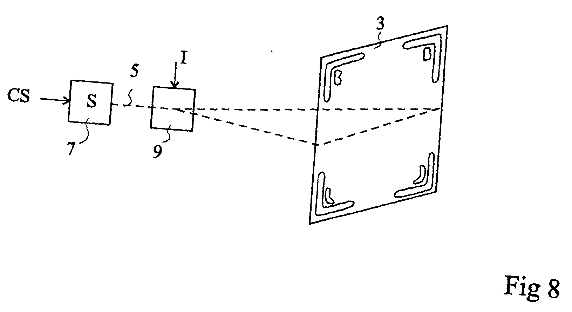

La figure 8 représente très schématiquement et partiellement, par une vue à rapprocher de celle de la figure 1, un écran 3 associé à des éléments participant à l'affichage. Cette figure illustre une application de l'invention à une correction de luminance. On y retrouve un écran à tube cathodique 3 pour afficher des images noir et blanc à partir d'un signal vidéo (non représenté) qui commande notamment l'intensité d'un faisceau d'électrons 5. Le faisceau d'électrons 5 est produit par une source 7 et dévié par un déviateur 9. L'écran 3 comporte, notamment au niveau de ses coins, des zones de non-uniformité de luminance, ou zones sombres. Selon la présente invention, on supprime les zones sombres de l'écran 3 en fournissant à la source 7 un signal de correction composite qui corrige l'intensité du faisceau d'électrons. Dans ce cas, les paramètres (par exemple 25) pour établir le signal de correction de l'intensité du faisceau en tout point de l'écran seront déterminés lors d'une phase de test de manière que l'écran ait une luminosité uniforme lorsqu'il reçoit un signal vidéo uniforme. On notera qu'une entrée de correction utilisée pour recevoir un signal de correction statique classique peut avoir une réponse en fréquence trop lente pour recevoir un signal de correction composite selon la présente invention. Dans un tel cas cependant, l'homme du métier saura sans difficultés adapter la vitesse des moyens de correction classiques.

On notera également que l'on a décrit un cas dans lequel le signal de commande, fourni pour chaque ligne, est déterminé à partir de cinq paramètres de ligne dont chacun est lui-même déterminé à partir de cinq paramètres stockés. Il est cependant possible que le nombre des paramètres de ligne utilisés pour déterminer le signal de commande de chaque ligne soit différent du nombre des paramètres stockés utilisés pour déterminer chaque paramètre de ligne.

**Revendications**

1. Signal de commande (CCS) d'un moyen de correction (21, 23) d'au moins un faisceau d'électrons qui balaie ligne à ligne un écran (3), dont l'amplitude évolue le long de chaque ligne selon une courbe d'un premier type déterminée par des paramètres de ligne (P1, P2, P3, P4, P5), chacun des paramètres de ligne évoluant, d'une ligne à l'autre, selon une courbe du premier type déterminée par des paramètres de colonne ($P1_{P_1}$-$P1_{P_5}$, $P2_{P_1}$-$P2_{P_5}$, $P3_{P_1}$-$P3_{P_5}$, $P4_{P_1}$-$P4_{P_5}$, $P5_{P_1}$-$P5_{P_5}$).

2. Signal de commande selon la revendication 1, **caractérisé en ce que** chaque courbe du premier type est la sommation :

> d'un niveau constant, fixé par un premier paramètre ($P1$),
> de deux demi-courbes en $X^n$, où n est une valeur prédéterminée quelconque, situées de part et d'autre du centre de la courbe, l'origine commune des demi-courbes en $X^n$ se situant au centre de la courbe et les valeurs maximales des demi-courbes en $X^n$ aux extrémités de la ligne étant fixées respectivement par un deuxième et un troisième paramètre ($P2$ ; $P3$), et
> d'une courbe en dos de chameau à dérivée continue, composée d'au moins deux bosses mises bout-à-bout et situées de part et d'autre du centre de la ligne, chaque bosse ayant une dérivée nulle en son sommet, et chaque valeur minimale ou maximale de la courbe étant fixée respectivement par un paramètre distinct ($P4$, $P5$).

3. Signal de commande selon la revendication 2, **caractérisé en ce que** ladite courbe en dos de chameau a une valeur nulle et une dérivée nulle au centre de la ligne.

4. Signal de commande selon la revendication 2 ou 3, **caractérisé en ce que** ladite courbe en dos de chameau a une valeur nulle et une dérivée nulle à ses extrémités.

5. Signal de commande selon l'une quelconque des revendications 1 à 4, **caractérisé en ce qu'**il est déterminé, pour chaque ligne, par cinq paramètres de ligne ($P1$, $P2$, $P3$, $P4$, $P5$).

6. Signal de commande selon l'une quelconque des revendications 1 à 5, **caractérisé en ce que** chaque paramètre de ligne évolue selon une courbe déterminée par cinq paramètres de colonne ($P1_{P_1}$-$P1_{P_5}$, $P2_{P_1}$-$P2_{P_5}$, $P3_{P_1}$-$P3_{P_5}$, $P4_{P_1}$-$P4_{P_5}$, $P5_{P_1}$-$P5_{P_5}$).

7. Dispositif d'ajustement de la convergence de trois faisceaux d'électrons parallèles, qui comporte un groupe de bobines de correction de convergence horizontale (21) et un groupe de bobines de correction de convergence verticale (23), **caractérisé en ce que** chaque groupe est commandé par un signal de commande selon l'une quelconque des revendications 1 à 6.

8. Dispositif de correction de la luminance d'un écran éclairé par au moins un faisceau d'électrons d'intensité commandable, **caractérisé en ce que** l'intensité du faisceau d'électrons est corrigée par un signal de commande selon l'une quelconque des revendications 1 à 6.

9. Circuit destiné à produire un signal de commande selon l'une quelconque des revendications 1 à 6, **caractérisé en ce qu'**il comprend :

> un premier calculateur (HSP) propre à produire le signal de commande (CCS) à partir d'un nombre prédéterminé de paramètres de ligne ($P1$, $P2$, $P3$, $P4$, $P5$), en cadence avec un signal de balayage des lignes de l'écran (I), et
> au moins un second calculateur (VSP) propre à produire les paramètres de ligne ($P1$, $P2$, $P3$, $P4$, $P5$) de chaque ligne de l'écran à partir d'un nombre prédéterminé de paramètres de colonne ($P1_{P_1}$-$P1_{P_5}$, $P2_{P_1}$-$P2_{P_5}$, $P3_{P_1}$-$P3_{P_5}$, $P4_{P_1}$-$P4_{P_5}$, $P5_{P_1}$-$P5_{P_5}$), en cadence avec un signal de balayage vertical de l'écran ($V_{SYNC}$).

Fig 1

Fig 2

20 ⤳

21            21

R G B

22

21            21

Fig 3A

23

20 ⤳

23            23

R G B

24

23

Fig 3B

P1

0                    I

Fig 4A

P2                          P3

-i        0        +i

Fig 4B

P4 - - - -

P5

-i        0        +i

Fig 4C

P2+P1                    P3+P1

CS

P1

-i        0        +i

Fig 4D

Fig 5B

Fig 5A

Fig 5C

Fig 6

Fig 7A

Fig 7B

Fig 7C

Fig 7D

Fig 8

**Office européen des brevets**

## RAPPORT DE RECHERCHE EUROPEENNE

Numéro de la demande

EP 01 41 0071

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | PATENT ABSTRACTS OF JAPAN<br>vol. 012, no. 412 (E-676),<br>31 octobre 1988 (1988-10-31)<br>& JP 63 149976 A (MITSUBISHI ELECTRIC CORP), 22 juin 1988 (1988-06-22)<br>* abrégé * | 1 | H04N3/233<br>H04N9/28 |
| A | US 5 790 210 A (KIM JIN-GOO ET AL)<br>4 août 1998 (1998-08-04)<br>* colonne 6, ligne 34 - ligne 53 * | 1 | |
| A | EP 0 059 076 A (TEKTRONIX INC)<br>1 septembre 1982 (1982-09-01)<br>* page 6, ligne 12 - page 7, colonne 4 * | 1 | |

DOMAINES TECHNIQUES RECHERCHES (Int.Cl.7)

H04N

Le présent rapport a été établi pour toutes les revendications

| Lieu de la recherche | Date d'achèvement de la recherche | Examinateur |
|---|---|---|
| LA HAYE | 5 septembre 2001 | Bequet, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 41 0071

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-09-2001

| Document brevet cité au rapport de recherche | Date de publication | Membre(s) de la famille de brevet(s) | Date de publication |
|---|---|---|---|
| JP 63149976 A | 22-06-1988 | JP 2542591 B | 09-10-1996 |
| US 5790210 A | 04-08-1998 | KR 197832 B | 15-06-1999 |
| EP 0059076 A | 01-09-1982 | JP 1187394 C | 20-01-1984 |
| | | JP 57140091 A | 30-08-1982 |
| | | JP 58020192 B | 21-04-1983 |
| | | CA 1225750 A | 18-08-1987 |

EPO FORM P0460

Pour tout renseignement concernant cette annexe : voir Journal Officiel de l'Office européen des brevets, No.12/82